# EUROPEAN PATENT SPECIFICATION

(11) **EP 0 380 030 B1**
(45) Date of publication and mention of the grant of the patent: **19.05.1993**
(21) Application number: 90101227.8
(22) Date of filing: 22.01.1990
(51) Int. Cl.: H05B 6/12, H05B 6/02

(54) **Low-frequency electromagnetic induction heater**
Mit niederfrequenter Spannung gespeistes elektromagnetisches Induktionsheizgerät
Appareil de chauffage par induction électro-magnétique à basse fréquence

(30) Priority: 23.01.1989 JP 14541/89
(43) Date of publication of application: 01.08.1990
(73) Proprietor: NIKKO CORPORATION LTD., Kyoto 607 (JP)
(72) Inventor: Iguchi, Atsushi, Yamashina-ku, Kyoto 607 (JP)
(74) Representative: Kador & Partner

(56) References cited:
- DE-B- 2 332 049

## Description

This invention relates to a low-frequency electromagnetic induction heater according to the precharacterizing part of claim 1.

Generally, petroleum, coal and/or natural gas are burnt as heat sources for generation of steam and heating water in generating stations and factories.

Fuel gases such as city gas and propane gas have been generally and widely used as heat sources for cooking.

Griddles for use in the restaurant business, such as where steakes and Japanese style tacos (Okonomiyaki) are served, commonly employ fuel gases as heat sources. These griddles for use in the restaurant business have thick iron cooking plates. Gas is burnt under these plates so as to heat up these plates, and materials to be cooked, such as meat, are placed on the surface of the plate and heated with the conduction heat coming through these plates.

Other methods for heating iron cooking plates are known. One method is where an iron cooking plate is heated with the use of a nichrome resistance wire heater. Another method is where an iron cooking plate is indirectly heated by an induction heat source (Japanese patent No.58-39525, and Japanese utility model No.56-86789).

Electrical resistance heater are preferred as a heat source in particular industrial production processes where heating by burning petroleum, coal and/or natural gas is not the preferable method for heating. An example is the process of combining an axle with a wheel and an inner bearing race of an axle with a bearing for rolling stock or an electric car. In these cases, a round metal plate with a central round hole must be combined with an axle. This is done by heating the round metal plate with a central round hole so that the central round hole is thermally expanded. Then the axle is inserted into the central round hole, and the plate is cooled down to give a tightly combined assembly. Electric heating is the most suitable method for heating in these types of cases.

The most frequently used method of heating in the restaurant business is gas burning, as discussed above. which results in the problem of management of combustion gas evolved. The combustion gas should not be exhausted towards the customers. And, in cases where the combustion gas is exhausted in a direction other than toward the customers, for example, beneath or to the side of the cooking plate, the efficiency of heating is considerably decreased. Therefore the combustion gas is currently exhausted towards the cook. When fuel gas is used, an exhaust duct must be provided, and this is constructed above the cook's head. Therefore, the cook has to breathe in the combustion gas and oily smoke, and is exposed to high temperature and high humidity, leading to a terrible working environment.

A further problem in heating by gas burning is that the oily smoke dirties walls and ceilings.

Another problem in heating by gas burning is that there exists the dangerous possibility of a gas-explosion or an oxygen deficiency. Therefore, at places such as an underground market or a high building, the use of gas burning is often restricted for safety reasons.

A further problem in heating by gas burning is that the cooking plate suffers an irreversible deformation due to strain inside the plate caused by thermal stress.

Also, heating with a nichrome resistance wire heater presents a serious problem in that the cooking plate is destructively deformed by the large strain caused by the thermal stress due to the local heating and the increased electrical capacity. Therefore, the method of electrical heating with a nichrome resistance wire heater presents difficulties.

A low frequency electromagnetic induction heater according to the precharacterizing part of claim 1 is known from DE- B2- 2 332049.

In the methods of indirect heating with an induction heat source there exists a critical and unavoidable problem. Electromagnetic vibration of the plate occurs, resulting in loud noises, and sometimes destruction of the cooking apparatus itself.

The primary object of this invention to provide a low-frequency electromagnetic induction heater which operates stably and safely due to inhibition of electromagnetic vibration by continuously attracting the element to be heated, such as an iron cooking plate or a metal vessel, to induction coils at all times during operation, which object is realized by the following embodiments:
(1) employment of three-phase alternating current power source, and,
(2) employment of a specific electric connection between induction coils.

Another object of this invention is to provide a low-frequency electromagnetic induction heater with high thermal efficiency and easy temperature control, which is effective for prevention of over-heating, and consequently, prevention of formation of burnt material on a food material such as meat.

Yet another object of this invention is to provide a low-frequency electromagnetic induction heater wherein the heating element is conveniently attached and detached, and yet still operates in a steady and safe manner.

Yet another object of this invention to provide a low-frequency electromagnetic induction heater which can operate without magnetically attracting iron cooking tools, such as knives, spatulas and trowels, by which a noisy sound may be generated due to vibration of these tools on a heating element, and without giving an undesirable magnetic effect to a precision instrument such as a wrist watch, by preventing escape of a magnetic flux from above and outside of the heating element.

The invention proposes a low frequency electromagnetic induction heater comprising at least six induction coils positioned in a circular symmetrical configuration, each coil being wound around a respective leg iron core of a yoke iron core, said leg iron cores each having a free end for delivering magnetic flux generated by said coils to a heating element to be heated by Joule heat in response to the magnetic flux, said coils forming three sets of at least two coils, each set of coils being arranged to receive electrical power of a different phase at a low frequency, in each set of coils, the coils being interconnected such that electric current flows from one coil to another coil placed opposite to the said one coil in the circular configuration, in which the three sets of coils are arranged to be powered from a three-phase low-frequency alectrical power source, the sets of induction coils are connected in a three-phase delta connection and the free ends of said leg iron cores of the induction coils are arranged to support the heating element in direct contact. This induction heater operates with continuous attraction of the heating element to the indcution coils.

Preferred embodiments of the inventive induction heater are given in the subclaims.

This invention will now be described in detail with reference to the following drawings.

FIG. 1 shows a typical connection diagram of a three-phase delta connection in a preferred embodiment of this invention.

FIG. 2 shows a principal operation of this invention.

FIG. 3 shows a side view of a heater in this invention from the direction of the terminal 6.

FIG. 4 shows a cross sectional view alongline C-C of the heater shown in FIG.3.

FIG. 5 shows a cross sectional view along line A-A of the heater shown in FIG.3.

FIG. 6 shows a plot of measuring points of Example 2 of this invention.

FIG. 7 shows a cross sectional view along line B-B of the heater shown in FIG.5.

FIG. 8(A) shows the relationship between the electromagnetic attractive force generated in the heater of this invention and time.

FIG. 8(B) shows the relationship between the current wave form of three-phase alternating current and time using the same time scale as FIG. 8(A).

FIG. 9 shows a temperature-rise curve of Example 2 of this invention.

FIG. 10 shows a rice-cooker, one of the preferred embodiments in this invention.

FIG. 11 and FIG. 12 show another embodiment in this invention, which is equipped with a good magnetic conductor to absorb escaping magnetic flux.

One feature of the low-frequency electromagnetic induction heater of this invention is that it comprises at least six induction coils, wherein each coil has a circular configuration. The coils are positioned in a circular and symmetrical configuration and form three sets of coils such that each set of coils receives electrical power in a different phase from a three-phase electrical power source. The coils are interconnected such that the current flows from a first coil to a second coil substantially opposed to the first coil. The employment of this specific electric connection among induction coils achieves:
(1) heating of a heating element with continuous attraction to induction coils at all times during operation.
(2) an enormous increase of electromagnetic flux density,
(3) prevention of noisy sound due to electromagnetic vibration of the heating element,and,
(4) high thermal efficiency.

The low-frequency electromagnetic induction heater of this invention provides a very convenient heater having easy temperature control, prevention of formation of burnt material on cooked materials such as meat, and prevention of generation and scattering of oily smoke. Because an iron plate itself is the heat source in the case when an iron plate is used as a heating element, the usual large temperature difference between the heat source and the heating element is avoided in this invention.

Any heating element can be used in this invention, if the heating element has a shape capable of contacting the plane of the leg iron core of the induction coils and is made of a material which can permeate magnetic flux, such as metallic material.In the case where the leg iron core of the induction coils have flat tops, any heating element having a flat portion capable of contacting with the induction coils can be used in this invention. In this case, the heating element can be simply placed on the flat tops of the leg iron core of the induction coils during use and removed after use, if such attachment and detachment is desired or nessesary.

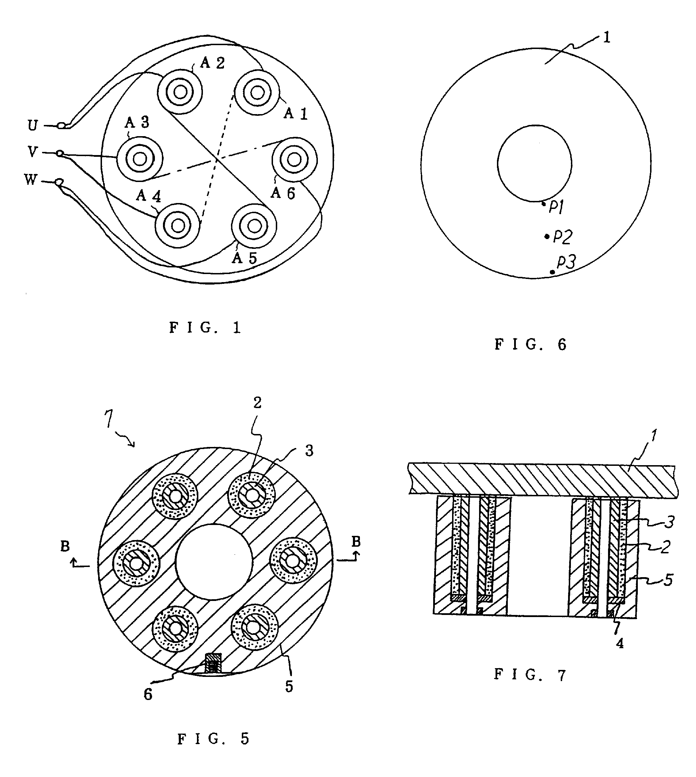

FIG. 1 shows a typical connection diagram of a three-phase delta connection which is the most important part of this invention. Six induction coils numbered from A1 to A6 are placed in a substantially circular configuration. The neighboring two coils A1 and A2 have been connected with the U phase of three-phase electric power, and the next neighboring two coils A3 and A4 have been connected with the V phase of three-phase electric power, and in the same manner, the last neighboring two coils A5 and A6 have been connected with the W phase of three-phase electric power. Then, each coil is connected to another substantially opposed coil in the circular and symmetrical configuration of the coils, so that the current flows from one coil to the opposing coil.

Namely, the coils A1 and A4, the coils A2 and A5, and the coils A3 and A6, respectively, are connected to each other. With this specific electric connection among coils, a continuous force due to an electromagnetic force is generated between the induction coils and the heating element, for example an iron plate, and thus, they are continuously attracting each other. Therefore, even when a low-frequency alternating current electrical power source is employed, the heater does not produce noise due to electromagnetic vibration.

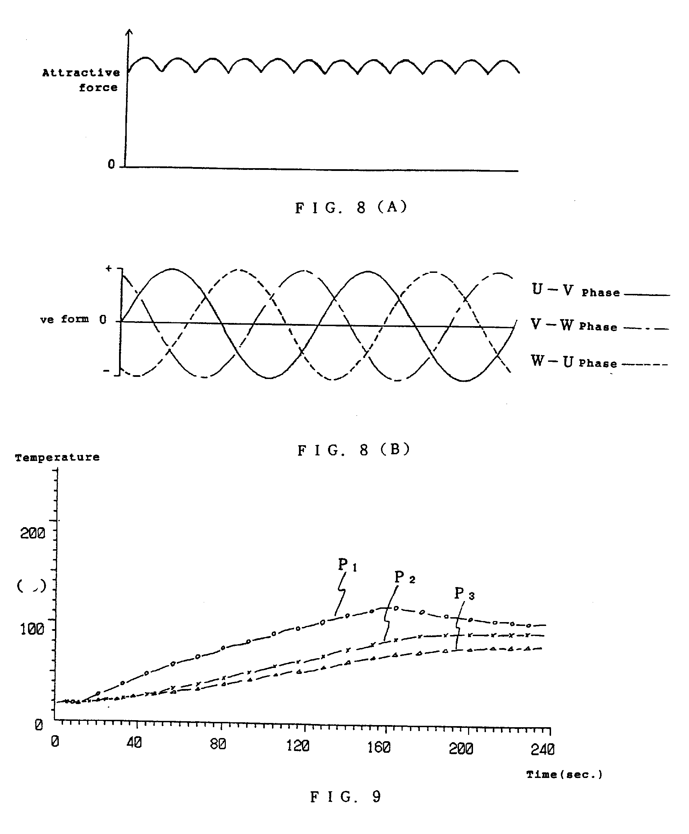

Point 0 in the FIG. 8 (A) indicates where no attractive forces are generated. FIG. 8 (B) shows current wave-form of the three-phase alternating current. The figure shows the time courses of each current wave-form of phases U, V, and W. The relationship between FIG. 8 (A) and FIG. 8 (B) will be explained in detail. The wave-form of attractive force in FIG. 8 (A) has been drawn on the same time scale as that of FIG. 8 (B) showing a current wave-form of the three-phase alternating current. The attractive force generated in this heater by the specific electric connection among induction coils is the result of synthesis of the attractive forces generates by each current phases, namely, both the waves in the minus part and that in the plus part generate the attractive forces.

Induction coils of either right-handed or left-handed rotation direction may be employed in this invention, since an alternating current power source is utilized. It is, however, pointed out that it is necessary for all the induction coils to have the same direction of rotation.

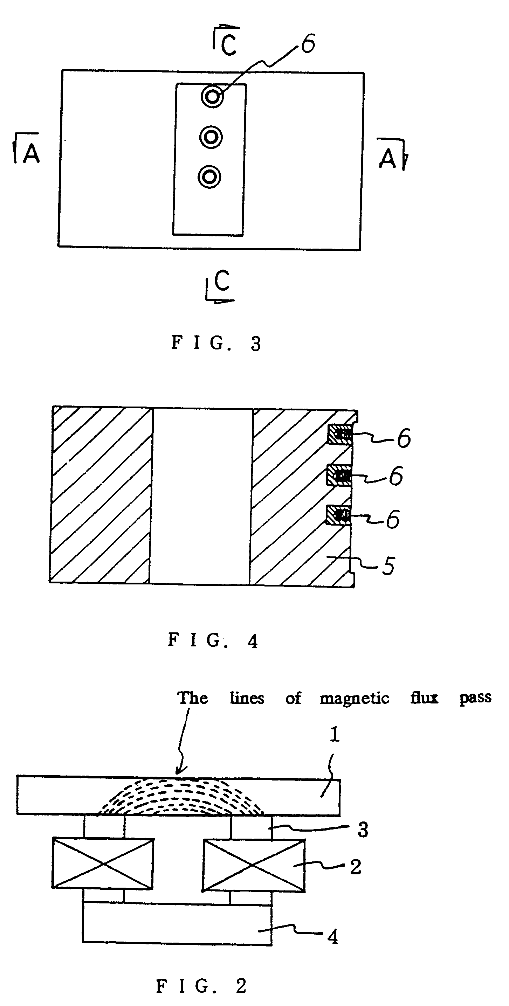

FIG. 2 shows a principal mode of operation of this invention. The induction coil formed around the leg iron core 3 is positioned on the yoke iron 4. The figure depicts the case where an iron plate for an inner bearing race is used as a heating element. The lines of magnetic flux pass through the iron plate 1, and the eddy current is generated around these lines. The eddy current thus generated heats up the iron plate 1 from the central portion from the inside (FIG. 6). Even in the case where the iron plate has a hole in its central portion, the iron plate is heated from the periphery of the hole, because the magnetic flux passes through the metal periphery of the hole. More explanation about FIG. 6 will be presented in the Example.

FIG. 3 shows a side view of a heater in this invention from the direction of the terminal 6.

A cross sectional view along line C-C of the heater is shown in FIG. 4. Three of the terminals 6 are provided so that the coils can receive electrical power from the three-phase electrical power source, as previously explained. The resinous molding compound 5 surrounds the induction heating elements.

FIG. 5 shows a cross sectional view along line A-A of the heater shown in FIG. 3. The induction coil formed around the leg iron core 3 is positioned on the yoke iron 4. The whole assembly is placed in a mold, then the mold is filled with molten resin to form a resinous mold having the coils and the irons inside. The reason why such resinous molding is performed is to protect the user from electrical shock and to maintain sight of the heater. Preferable molding resins are those having high thermal resistivities, for example, epoxy resins and silicone resins.

FIG. 7 shows a cross sectional view along line B-B of the heater shown in FIG. 5. The heating element is an iron cooking plate 1 for cooking beef steak, for example.

In the case where 25 A of an alternating current flows through the primary induction coils by supplying 200 V of a commercial frequency three-phase alternating power source at 50 or 60 Hz, the current of 0.5 V and 10,000 A flows through the secondary iron plate according to the voltage transformation principle. The low voltage and high current combination are the most important factor in heating. This invention satisfactorily puts the principle into practice. Because the voltage of the current passing through the iron platel is so low, a user never receives an electrical shock even if he touches the plate.

It is preferable in this invention that the low-frequency electromagnetic induction heater comprises at least six induction coils electrically connected in a three-phase delta connection. As shown in FIG. 8, in this connection the continuous attractive force is realized in the best manner.

The iron plate 1, when employed as a heating element, may have any thickness as long as a magnetic flux can permeate through the plate. For example, the thickness ranges from 1 to 10 cm, but it is not restricted to this range. At least six of the induction coils 2 formed around the leg iron core 3 are placed under the iron plate 1. Although the number of the induction coils may be any number larger than six, for example, nine or twelve, six is preferable from the view point of achieving an easy electrical connection. The circular configuration of the six induction coils is preferable. However the configuration is not restricted to the above. Any configuration which allows the magnetic flux to pass through the iron plate 1 can be employed.

The heating element 1 is placed closely to the induction coils 2 so that the magnetic flux can easily pass through the plate. A heat-resistant film such as a polyimide film or polyaromatic-amide film may be inserted as a buffer material between the iron plate 1 and the leg iron core 3, unless the film inhibits the permeation of the magnetic flux through the plate. The material of the leg iron core 3 or the yoke iron 4 may be any material if it permits permeation of the magnetic flux. One preferable concrete example is a yoke iron 4 of a coiled silicon steel plate. The thickness of the iron core 3 or the iron yoke 4 is such that the thickness maintains prevention of magnetic saturation. Preferably, the area of the cross section is sufficiently large so as to maintain a density of the magnetic flux below (20,000 gauss) 2 Tesla.

The three-phase alternating current power source is preferably one of the commercial frequency. The commercial frequency current source is widely available and, therefore, economically most preferable. Here, the commercial frequency may be different from country to country. For example, in Japan, it is of 50 Hz or 60 Hz. The reason why the three-phase alternating current source is used is so that the attractive force between the induction coils and the iron plate can be continuously generated and maintained.

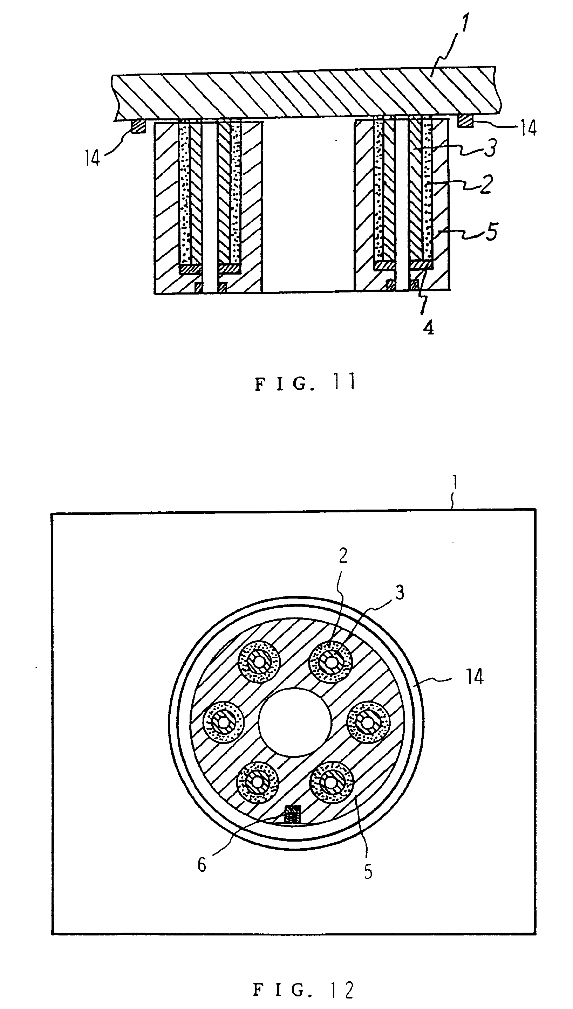

Next, in the case where prevention of escape of a magnetic flux from a heating element 1 to above and outside of the heating element 1 is nessesary, a good magnetic conductor 14, which absorbs escaping magnetic flux, is attached around a conjunction of iron cores 3 and a heating element 1, as shown in FIG 11 and FIG 12. In the embodiment shown in FIG 11 and FIG 12, the good magnetic conductor 14 is fixed with bolts to the heating element 1, however, the method of fixation is not restricted to the above. A preferable good magnetic conductor 14 is one that has a ring like outer shape and is made of layers of silicon steel plates. The size of the good magnetic conductor is restricted to such sizes for which the thermal efficiency of the heating element 1 is not drastically decreased. An excessively large good magnetic conductor 14 decreases the thermal efficiency of the apparatus by reducing the density of the effective magnetic flux inside the heating element 1. For example, a preferable good magnetic conductor 14 is one that has a ring like outer shape of 400 mm in diameter, which is made of layers of silicon steel plates of 20 mm width and 15 mm thickness.

In the above configuration of the apparatus, the magnetic flux is generated inside the iron cores 3, which, individually, are surrounded by the induction coils 2, and passes through the heating element 1 wherein Joule heat is evolved, and finally flow to reach the opposing iron cores 3. Here, it should be noted that the iron cores 3 are made of a good magnetic conducting material, and that the heating element 1 is made of a less magnetic conducting material than that used in the iron cores 3. Therefore, an escape of the magnetic flux from the heating element 1 occurs to some extent. Hence, the present invention employs a good magnetic conductor, which absorbs escaping magnetic flux, on the conjunction of iron cores 3 and the heating element 1.

The temperature of the heating element can be easily controlled by controlling the electrical current. Because the electrical current in ampere units and the temperature of the heating element has a simple and constant relation, the temperature of an iron cooking plate or a metal vessel is easily controlled to a suitable temperature for individual cooking conditions. For example, in the case of cooking a beef steak, the temperature of the iron cooking plate is automatically controllable in the range from 180 to 200 °C with the accuracy of ±1 °C. Thus, cooking by intuition or perception is not necessary, and a veteran cook is not required. The merit of this heater comes from employing an iron cooking plate or a metal vessel itself as the heating element. This aspect is completely different in principle from the prior art in which the temperature difference between the heat source and the heating element always exists. Because formation of burnt material or a generation of an oily smoke can be prevented with an extremely high probability, a duct may be unnecessary. Clean cooking provides an excellent working environment. The present three-phase alternating current induction heater dose not make noise, and is useful as a very quiet cooking apparatus. In addition, even after usage for a long period of time, the present three-phase alternating current induction heater does not suffer deformation of the iron plate.

Any optional elements, such as a temperature indicator, an overheat inhibitor, and a limit switch can be attached to the present three-phase alternating current induction heater.

Examples of effective applications of the present three-phase alternating current induction heater are a cooking plate for cooking meat such as a beef steak, as described above, a boiler, a steamer, a pan, a pot, a low-range for cooking french dishes, an inner bearing race machine for vehicles, and a heater for any other metal materials.

In this invention, a low-frequency electromagnetic induction hearer with a stable and safe operation due to prevention of an electromagnetic vibration by continuous attraction of a heating element, such as an iron cooking plate and a metal vessel, to induction coils at all times during operation has been realized because of the following embodiments:
(1) employment of a three phase alternating current power source, and,
(2) employment of a specific electric connection among induction coils.

The low-frequency electromagnetic induction heater of this invention can provide the following numerous merits:
(1) Constuction of a duct may be unnecessary, because formation of burnt material or generation of oily smoke is prevented with an extremely high probability;
(2) An excellent working environment can be provided by clean cooking;
(3) A very quiet cooking apparatus is provided because of elimination of noisy sound; and in addition,
(4) The present three-phase alternating current induction heater is free from the disadvantage of deformation of the iron plate after usage for a long period of time, because the iron cooking plate of the metal vessel itself is the heating element, and because the iron plate of the vessel is not necessarily heated to such a high temperature that may cause overheating.

Further in this invention, a good magnetic conductor which absorbs escaping magnetic flux, is attached around iron cores and on a heating element of a low-frequency electromagnetic induction heater, which realizes;
(1) prevention of escape of a magnetic flux from a heating element to above and outside of the heating element, consequently,
(2) prevention of noisy sound generation due to vibration of iron cooking tools, such as knives, spatulas and trowels, on a heating element, or of producing an undesirable magnetic effect to a precision instrument such as a wrist watch.

This invention will now be illustrated with reference to the following examples that by no means limit the scope of the invention.

### Example 1

An iron cooking plate having 50 mm thickness, 50 cm length and 100 cm width is placed on induction coils as shown in FIG. 1 to 5 and 7 and an electromagnetic induction griddle is constructed. The dimensions of the whole resinous molding part 7 including the induction coils, shown in a ground plan FIG. 5 are, about 270 mm in outer diameter and about 100 mm in inner diameter for the central hole. Each of the six induction coils is about 45 mm in diameter, and each of the central holes inside the induction coils has a diameter of about 15 mm. The height of the whole assembly shown in a front view FIG. 7, is about 160 mm. The resin used for molding is an epoxy heat-resistant resin.

The three-phase alternating current power of 60 Hz, 200 V, and 25 A is supplied to the induction coils to provide a current flow. It can be estimated from the electric power supplied to the primary induction coils that the current inside the iron cooking plate is of 0.5 V and 10.000 A. The temperature of the iron cooking plate of this apparatus could be raised to 200 °C in 15 minutes. After that, a beefsteak was put on the iron plate whose temperature was controlled at 200 °C, a constant temperature. The beef steak was finely roasted without the formation of burnt material or generation of oily smoke. It was recognized that this cooking apparatus does not sound noisy and thus is quiet.

### Example 2

An inner bearing race for vehicles shown in FIG. 6, having an other diameter of 290 mm, an inner diameter of 130 mm and a thickness of 35 mm, and made of iron, was placed on the induction coils instead of the iron plate 1 in the FIG. 7. The temperature of the inner bearing race was raised from 25 °C to 100 °C. By supplying a three-phase alternating current power of 200 V and 14 A to the apparatus, the temperature at the periphery of the central hole P1 was raised to 100 °C after 160 seconds as shown in FIG. 9. After 160 seconds the temperature curve became flat, which was caused by the action of the thermistor, by cutting the electrical connection to the electrical power source. The temperature at the middle part, P2, and at the periphery of the outer side of the inner-race, P3, reach 100 °C after about 200 seconds. The reason why the temperature at the periphery of the central hole, P1, is higher than the temperature at the middle part, P2, or at the periphery of the outer side of the inner-race, P3, is considered to be due to the density of the magnetic flux being higher in the central part than in the other parts. The thermal expansion coefficient for iron is α=1.2 X 10⁻⁵ K⁻¹. Thus, the temperature difference of 75 °C makes the iron expansion of 0.117 mm. Consequently, an axle could be inserted into the thermally expanded race to yield a tightly combined assembly.

In the case where the above operation is performed by induction heating with a transformer as in the prior art,the opration takes more than 30 minutes. Therefore, it can be seen that this heating apparatus could perform the same job as the transformer in the prior art, in only about one tenth of the time required by the transformer.

### Example 3

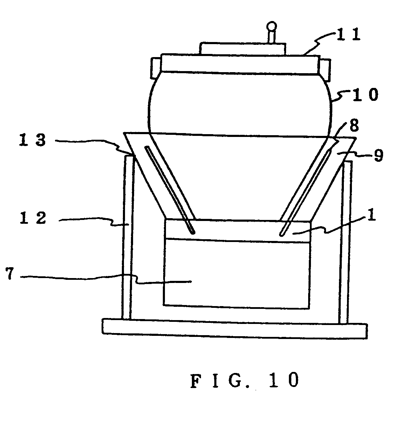

FIG. 10 shows an example of a rice-cooker according to this invention. The rice-cooker comprises a pot 10 wherein the rice is boiled in the upper part, and a resinous molding part 7 including induction coils and a heating element 1 ( an iron plate ) in the lower part. The pot 10 has heat-pipes 8 at the inside of its side-wall part 9. In this example, the linear heat-pipes were set up with a standing configuration. Commercially available heat-pipes may be employed. The heat-pipes have the effect of enlarging the heating surface area so that the rice-cooker can provide heat from the side-wall.

The rice-cooker described is a type of a pressure cooker, so that it has a lid 11. The rice-cooker has props 12 and fulcrums 13 so that the cooked rice can be easily removed from the pot by rotating the pot. The structure of the resinous molding part 7 is shown in FIG. 1 to 5 and 7. The entire iron plate 1 serves as a heating plate, and therefore the heating surface is very large. Because of the large heating surface, the temperature of the heating element can be set within 30 °C higher than the cooking temperature of 100 to 110 °C without burning the materials inside.

The principle described in this example may be applied to a low-range or other heating device.

### Example 4

In this example, the effect of a good magnetic conductor for decreasing the density of an escaping magnetic flux will be explained by the data measured with a Gauss counter.

An iron cooking plate having 50 mm thickness, 50 cm length and 100 cm width is placed on induction coils as shown in FIG. 1 to 5, 11 and 12 and an electromagnetic induction griddle is constructed. The three-phase alternating current power of 60 Hz, 200 V, and 25 A is supplied to the induction coils to allow current flow. It can be estimated from the electric power supplied to the primary induction coils that the current inside the iron cooking plate is of 0.5 V and 10.000 A. The temperature of the iron cooking plate of this apparatus could be raised to 185 °C during 15 minutes. After that, a beef steak was roasted on the iron plate at constant temperature of 185 °C. The beef steak was finely roasted without a formation of burnt material or generation of an oily smoke. It has been recognized that this cooking apparatus does not sound noisy and thus, is quiet.

In the case where a silicon steel ring of 400 mm in diameter, made of layers of silicon steel plates of 20 mm width and 15 mm thickness, is used as a good magnetic conductor 14, and where the three-phase alternating current power of 60 Hz, 200 V, and 25 A is supplied to the induction coils to heat up the iron cooking plate 1, the density of escaping magnetic flux has been measured and found to be in the range from 3 to 5 gauss by the use of Gauss counter.

Contrary to the above, in the case where a good magnetic conductor 14 is not used, the density of the escaping magnetic flux has been measured and found to be in the range from 0,018 to 0,020 Tesla (180 to 200 gauss) by the use of (Gauss) (Tesla) counter.

## Claims

1. A low frequency electromagnetic induction heater comprising at least six induction coils (2) positioned in a circular symmetrical configuration, each coil (2) being wound around a respective leg iron core (3) of a yoke iron core (4), said leg iron cores (3) each having a free end for delivering magnetic flux generated by said coils (2) to a heating element (1) to be heated by Joule heat in response to the magnetic flux, said coils (2) forming three sets of at least two coils, each set of coils being arranged to receive electrical power of a different phase at a low frequency, in each set of coils, the coils (2) being interconnected such that electric current flows from one coil (A1, A2, A3) to another coil (A4, A5, A6) placed opposite to the said one coil in the circular configuration, **characterized in that** the three sets of coils are arranged to be powered from a three-phase low-frequency electrical power source, the sets of induction coils are connected in a three-phase delta connection and the free ends of said leg iron (3) cores of the induction coils (2) are arranged to support the heating element (1) in direct contact.

2. The low-frequency electromagnetic induction heater according to claim 1, characterized in that the number of the induction coils (2) is six.

3. The low-frequency electromagnetic induction heater according to claim 1, characterized in that it is operatable with the three-phase alternating current power source in a commercial frequency range.

4. The low-frequency electromagnetic induction heater according to claims 1, 2 or 3, characterized in that the heating element (1) is an iron plate or a metal vessel.

5. The low-frequency electromagnetic induction heater according to claim 4, characterized in that the center of the iron plate or the metal vessel coincides with the center of the generated magnetic flux.

6. The low-frequency electromagnetic induction heater according to claim 4, characterized in that the heating element (1) is an iron plate adapted for cooking meat.

7. The low-frequency electromagnetic induction heater according to claim 1, characterized in that it is a steam generator.

8. The low-frequency electromagnetic induction heater according to claim 1, characterized in that it is a rice-cooker.

9. The low-frequency electromagnetic induction heater according to claims 1, 2, 3, 7 or 8, characterized in that the induction coils (2) are surrounded by a magnetic conductor (14), absorbing escaping magnetic flux, said magnetic conductor being attached to the heating element (1).

10. The low-frequency electromagnetic induction heater according to anyone of the preceding claims, characterized in that the coils (2) are enclosed in a resinous mould (5).

11. A low-frequency electromagnetic induction heater according to claim 10, characterized in that the resin (5) is a heat resistant resin.

12. A low-frequency electromagnetic induction heater according to claim 10, characterized in that the resin (5) is either epoxy or silicone resin.

13. A low-frequency electromagnetic induction heater according to anyone of the preceding claims, characterized in that the yoke iron core (4) and the leg iron core (3) are made of silicone steel plates and have a density of magnetic flux below (20,000 Gauss) 2 Tesla.

14. A low-frequency electromagnetic induction heater according to claim 4, characterized in that the iron plate or the metal vessel has a thickness of 1 to 10 cm at a portion at which the iron plate or the metal vessel directly rests on the leg iron core (3).

15. A low-frequency electromagnetic induction heater according to claim 4, characterized in that a thermocontroller is provided to maintain the iron plate or the metal vessel at a predetermined temperature.

## Patentansprüche

1. Mit Niederfrequenzspannung gespeiste elektromagnetische Induktionsheizvorrichtung, die mindestens sechs Induktionsspulen (2) umfaßt, die in einer kreisförmigen, symmetrischen Konfiguration angeordnet sind, wobei jede Spule (2) um einen entsprechenden Eisenkernschenkel (3) eines Magneteisenkerns (4) gewickelt ist, wobei diese Eisenkernschenkel (3) jeweils ein freies Ende aufweisen, um den von den Spulen (2) erzeugten Magnetfluß an ein Heizelement (1) abzugeben, das entsprechend dieses Magnetflusses durch Joulsche Wärme erwärmt werden soll, wobei diese Spulen (2) drei Sätze von mindestens zwei Spulen bilden, jeder Satz der Spulen so angeordnet ist, daß er eine elektrische Leistung mit verschiedener Phase bei Niederfrequenz aufnimmt, die Spulen (2) in jedem Spulensatz so miteinander verbunden sind, daß der elektrische Strom von einer Spule (A1, A2, A3) zur anderen Spule (A4, A5, A6) fließt, die in dieser kreisförmigen Konfiguration entgegengesetzt zu dieser Spule angeordnet ist, **dadurch gekennzeichnet,** daß die drei Spulensätze so angeordnet sind, daß sie von einer elektrischen Dreiphasen-Stromquelle mit Niederfrequenz gespeist werden, die Sätze der Induktionsspulen in einer Dreiphasen-Dreieckschaltung verbunden sind und die freien Enden der Eisenkernschenkel (3) der Induktionsspulen (2) so angeordnet sind, daß sie das Heizelement (1) im direkten Kontakt tragen.

2. Mit Niederfrequenzspannung gespeiste elektromagnetische Induktionsheizvorrichtung nach Anspruch 1,
**dadurch gekennzeichnet,** daß die Anzahl der Induktionsspulen (2) sechs beträgt.

3. Mit Niederfrequenzspannung gespeiste elektromagnetische Induktionsheizvorrichtung nach Anspruch 1,
**dadurch gekennzeichnet,** daß sie mit einer Dreiphasen-Wechselstromquelle im kommerziellen Frequenzbereich betrieben werden kann.

4. Mit Niederfrequenzspannung gespeiste elektromagnetische Induktionsheizvorrichtung nach den Ansprüchen 1, 2 oder 3,
**dadurch gekennzeichnet,** daß das Heizelement (1) eine Eisenplatte oder ein Metallgefäß ist.

5. Mit Niederfrequenzspannung gespeiste elektromagnetische Induktionsheizvorrichtung nach Anspruch 4,
**dadurch gekennzeichnet,** daß die Mitte der Eisenplatte oder des Metallgefäßes mit der Mitte des erzeugten Magnetflusses übereinstimmt.

6. Mit Niederfrequenzspannung gespeiste elektromagnetische Induktionsheizvorrichtung nach Anspruch 4,
**dadurch gekennzeichnet,** daß das Heizelement (1) eine zum Kochen von Fleisch geeignete Eisenplatte ist.

7. Mit Niederfrequenzspannung gespeiste elektromagnetische Induktionsheizvorrichtung nach Anspruch 1,
**dadurch gekennzeichnet,** daß sie ein Dampferzeuger ist.

8. Mit Niederfrequenzspannung gespeiste elektromagnetische Induktionsheizvorrichtung nach Anspruch 1,
**dadurch gekennzeichnet,** daß sie ein Reiskocher ist.

9. Mit Niederfrequenzspannung gespeiste elektromagnetische Induktionsheizvorrichtung nach den Ansprüchen 1, 2, 3, 7 oder 8, **dadurch gekennzeichnet,** daß die Induktionsspulen (2) von einem Magnetleiter (14) umgeben sind, der den entweichenden Magnetfluß absorbiert, wobei dieser Magnetleiter an das Heizelement (1) angebracht ist.

10. Mit Niederfrequenzspannung gespeiste elektromagnetische Induktionsheizvorrichtung nach einem der vorstehenden Ansprüche, **dadurch gekennzeichnet,** daß die Spulen (2) in einer Harzform (5) eingeschlossen sind.

11. Mit Niederfrequenzspannung gespeiste elektromagnetische Induktionsheizvorrichtung nach Anspruch 10,
**dadurch gekennzeichnet,** daß das Harz (5) ein wärmebeständiges Harz ist.

12. Mit Niederfrequenzspannung gespeiste elektromagnetische Induktionsheizvorrichtung nach Anspruch 10,
**dadurch gekennzeichnet,** daß das Harz (5) entweder ein Epoxy- oder ein Siliconharz ist.

13. Mit Niederfrequenzspannung gespeiste elektromagnetische Induktionsheizvorrichtung nach einem der vorstehenden Ansprüche, **dadurch gekennzeichnet,** daß der Magneteisenkern (4) und der Eisenkernschenkel (3) aus Siliconstahlplatten bestehen und eine Magnetflußdichte von weniger als 2 Tesla (20000 Gauß) aufweisen.

14. Mit Niederfrequenzspannung gespeiste elektromagnetische Induktionsheizvorrichtung nach Anspruch 4,
**dadurch gekennzeichnet,** daß die Eisenplatte oder das Metallgefäß an einer Stelle, an der die Eisenplatte oder das Metallgefäß direkt auf dem Eisenkernschenkel (3) sitzt, eine Dicke von 1 bis 10 cm aufweisen.

15. Mit Niederfrequenzspannung gespeiste elektromagnetische Induktionsheizvorrichtung nach Anspruch 4,
**dadurch gekennzeichnet,** daß ein Thermoregler vorgesehen ist, um die Eisenplatte oder das Metallgefäß bei einer bestimmten Temperatur zu halten.

## Revendications

1. Appareil de chauffage par induction électromagnétique à basse fréquence, comprenant au moins six bobines d'induction (2) disposées dans une configuration symétrique circulaire, chaque bobine étant formée autour d'un noyau de fer respectif formant une branche (3) d'un noyau de fer formant culasse (4), lesdits noyaux de fer formant des branches (3) ayant chacun une extrémité libre pour délivrer des flux magnétiques créés par lesdites bobines (2) à un élément chauffant (1) à chauffer par effet Joule en réponse auxdits flux magnétiques, lesdites bobines (2) formant trois jeux d'au moins deux bobines, chaque jeu de bobines étant agencé pour recevoir de l'énergie électrique de phase différente à une basse fréquence, dans chaque jeu de bobines les bobines (2) étant interconnectées de telle manière que le courant électrique circule d'une bobine (A1, A2, A3) à une autre bobine (A4, A5, A6) placée à l'opposé de ladite une bobine dans la configuration circulaire, caractérisé en ce que les trois jeux de bobines sont agencés pour être alimentés en énergie à partir d'une source d'énergie électrique triphasée à basse fréquence, les jeux de bobines d'induction sont connectés pour former un montage triphasé en triangle et les extrémités libres desdits noyaux de fer formant une branche (3) des bobines d'induction (2) sont agencées pour supporter l'élément chauffant (1) en contact direct avec celui-ci.

2. Appareil de chauffage par induction électromagnétique à basse fréquence selon la revendication 1, caractérisé en ce que le nombre de bobines d'induction (2) est de six.

3. Appareil de chauffage par induction électromagnétique à basse fréquence selon la revendication 1, caractérisé en ce qu'il peut fonctionner avec la source d'énergie électrique à courant alternatif triphasé dans une gamme de fréquences industrielles.

4. Appareil de chauffage par induction électromagnétique à basse fréquence selon la revendication 1, 2 ou 3, caractérisé en ce que l'élément chauffant (1) est une plaque de fer ou un récipient métallique.

5. Appareil de chauffage par induction électromagnétique à basse fréquence selon la revendication 4, caractérisé en ce que le centre de la plaque de fer ou du récipient métallique coïncide avec le centre du flux magnétique créé.

6. Appareil de chauffage par induction électromagnétique à basse fréquence selon la revendication 4, caractérisé en ce que l'élément chauffant (1) est une plaque de fer adaptée pour cuire de la viande.

7. Appareil de chauffage par induction électromagnétique à basse fréquence selon la revendication 1, caractérisé en ce qu'il constitue un générateur de vapeur.

8. Appareil de chauffage par induction électromagnétique à basse fréquence selon la revendication 1, caractérisé en ce qu'il constitue une marmite à riz.

9. Appareil de chauffage par induction électromagnétique à basse fréquence selon l'une des revendications 1, 2, 3, 7 ou 8, caractérisé en ce que les bobines d'induction (2) sont entourées d'un conducteur magnétique (14) absorbant le flux magnétique de fuite, ledit conducteur magnétique étant fixé à l'élément chauffant (1).

10. Appareil de chauffage par induction électromagnétique à basse fréquence selon l'une des revendications précédentes, caractérisé en ce que les bobines (2) sont encloses dans une pièce moulée en résine (5).

11. Appareil de chauffage par induction électromagnétique à basse fréquence selon la revendication 10, caractérisé en ce que la résine (5) est une résine résistante à la chaleur.

12. Appareil de chauffage par induction électromagnétique à basse fréquence selon la revendication 10, caractérisé en ce que la résine (5) est soit de la résine époxy, soit de la résine aux silicones.

13. Appareil de chauffage par induction électromagnétique à basse fréquence selon l'une des revendications précédentes, caractérisé en ce que le noyau de fer formant culasse (4) et les noyaux de fer formant une branche (3) sont constitués de tôles d'acier au silicium et ont une densité de flux magnétique inférieure à 2 teslas (20 000 gauss).

14. Appareil de chauffage par induction électromagnétique à basse fréquence selon la revendication 4, caractérisé en ce que la plaque de fer ou le récipient métallique a une épaisseur de 1 à 10 cm dans une partie au niveau de laquelle la plaque de fer ou le récipient métallique repose directement sur les noyaux de fer formant des branches (3).

15. Appareil de chauffage par induction électromagnétique à basse fréquence selon la revendication 4, caractérisé en ce qu'un régulateur de température est prévu pour maintenir la plaque de fer ou le récipient métallique à une température constante.
